# EUROPÄISCHE PATENTSCHRIFT

(11) **EP 2 909 078 B1**
(45) Veröffentlichungstag und Bekanntmachung des Hinweises auf die Patenterteilung: **22.04.2020**
(21) Anmeldenummer: 13779614.0
(22) Anmeldetag: 22.10.2013
(51) Int. Cl.: B62K 21/26

(54) **GEFEDERTER FAHRRADHANDGRIFF**
SPRING BIASED BICYCLE HANDGRIP
POIGNÉE SUSPENDU AU MOYEN D'UN RESSORT POUR BICYCLETTE

(30) Priorität: 22.10.2012 DE 102012110074
(43) Veröffentlichungstag der Anmeldung: 26.08.2015
(73) Patentinhaber: Mildenberger, Klaus, 80469 München (DE)
(72) Erfinder: Mildenberger, Klaus, 80469 München (DE)
(74) Vertreter: Meitinger, Thomas Heinz
(86) Internationale Anmeldenummer: PCT/EP2013/072074
(87) Internationale Veröffentlichungsnummer: WO 2014/064107

(56) Entgegenhaltungen:
- AT-A2- 511 268
- DE-C- 150 513
- DE-C- 473 694
- DE-C- 802 424
- DE-C- 826 829
- DE-U1- 20 311 740
- DE-U1-202004 008 297
- FR-A- 352 117
- FR-A- 634 562
- US-A- 583 457
- US-A- 1 258 647
- US-A- 5 140 867

## Beschreibung

### GEBIET DER ERFINDUNG

Die vorliegende Erfindung betrifft einen Fahrradgriff für den Lenker eines Fahrrads, wobei der Griff insbesondere eine Flügelform aufweist.

### HINTERGRUND DER ERFINDUNG

Bei einem Fahrrad sind die beiden Fahrradgriffe die einzige Verbindung Mensch/Maschine, an der die menschliche Haut ungeschützt und permanent mit dem Fahrrad in Berührung kommt. Fast alle Griffe sind zylindrisch und müssen von der Hand ganz umschlossen und gehalten werden, was auf Dauer zu Ermüdung führt und nicht bequem ist. Fahrbahnstöße wirken unmittelbar auf die Hand, Arme und die Schultern. Mit unterschiedlichen Materialien versuchen die Hersteller daher höheren Komfort zu erzeugen. Einige Griffe haben sogenannte Handballenauflagen, insbesondere eine flügelartige Ausbuchtung an der Außenseite des Griffes. Oft ist aber der Griff lediglich auf den Lenker aufgeschoben. Hier kann sich der Flügel unter Belastung verdrehen und wird unbrauchbar. Um dieses Problem zu vermeiden, haben Griffe eine äußere Klemmung die dieses Verdrehen verhindern. Bei diesen Griffen sorgt insbesondere ein Kompositmaterial für eine gewünschte Dämpfung und leichte Federwirkung. Ein Nachteil verschiedener Kunststoffe kann ein Zersetzen insbesondere eines weicheren Kunststoffes durch den Handschweiß und ferner unschöne Schmutzablagerungen auf dem Griff und auch an der Hand sein. Ebenso ist die Federwirkung bekannter Griffe eher gering, insbesondere nicht oder kaum wahrnehmbar.

Aus der DE 20 2004 008 297 U1 ist ein Fahrradgriff in Flügelform mit einer weichen und einer festen Schicht Kunststoff bekannt, der durch das Griffmaterial selbst eine minimale Federung aufweist. Dokument DE150513 offenbart einen weiteren bekannten Fahrradgriff.

### ZUSAMMENFASSUNG DER ERFINDUNG

Eine Aufgabe ist es, einen Fahrradgriff bereitzustellen, dessen Federwirkung verbessert ist. Insbesondere ist es eine Aufgabe, bei einem Fahrradgriff die Möglichkeit einer Federung des Fahrradgriffes unabhängig vom Material des Greifelements zu schaffen.

Gemäß einer beispielhaften ersten Ausführungsform der Erfindung gemäß Anspruch 1 wird zur Lösung der Aufgabe ein Fahrradgriff vorgeschlagen, aufweisend ein auf ein Lenkerrohr eines Fahrradlenkers aufschiebbares Greifelement mit einem Abstützteil, geeignet zur Auflage der Handballen, ein Halteelement und ein Federelement, wobei das Federelement und das Halteelement innerhalb eines Lenkerrohrs eines Fahrradlenkers anordenbar sind, wobei das Federelement mit dem Halteelement und dem Greifelement drehfest verbindbar ist, derart dass bei einer Kraftbeaufschlagung des Abstützteils gegen eine Federkraft des Federeelements in einem auf das Lenkerrohr aufgeschobenen Zustand eine Drehbewegung des Greifelements um die Rohrmittelachse des Lenkerrohrs ausführbar ist, wobei die Form des Abstützteils so gestaltet ist, dass das Greifelement eine Flügelform aufweist.

Die Erfindung vermindert oder überwindet die oben genannten Nachteile durch die Merkmale des unabhängigen Anspruchs. Weitere vorteilhafte Ausführungen sind in den Unteransprüchen angegeben.

Erfindungsgemäß ist vorgesehen, die Form des Abstützteils so zu gestalten, dass das Greifelement eine Art Flügelform aufweist. Insbesondere erlaubt die geeignete Wahl einer Flügelform, dass die Hände jeweils bequem vollflächig aufliegen können.

Bevorzugt ist die Form in ihrer Fläche um mindestens den Faktor 1.1 größer als bei bisher bekannten Flügelformen, um eine auf die Abstützfläche einwirkende Kraft mit einem größeren Hebel ansetzen zu können. Bei bekannten Systemen spielt die Größe der Handballenauflage in diesem Zusammenhang keine Rolle.

In einer bevorzugten Ausführung der Erfindung ist vorgesehen, dass sich das Greifelement von einer Ausgangsposition, in der es nicht mit einer Kraft beaufschlagt ist, um zumindest 10 Grad, bevorzugt mindestens 15 Grad, noch bevorzugt mindestens 20 Grad um die Mittelachse des Lenkerrohrs gegen die Federkraft händisch verdrehen lässt. Die federnde Verdrehbarkeit des Griffes bis zu dem genannten Maximaldrehausschlag erfolgt bei entsprechender maximaler händischer Belastung durch den Fahrer und ist entsprechend abhängig von dessen Gewicht und dessen Kraft. Durch die federnde Verdrehbarkeit werden Schlaglöcher, Bordsteinkanten und ähnliche auftretende Hindernisse abgefangen bzw. gedämpft, während die Handballen weiterhin auf dem Flügel aufliegen. Durch die Trennung von Federwirkung und Material des Greifelements, können erstmals Materialien eingesetzt werden, die bisher aufgrund ihrer Härte eher ungeeignet waren. Vorteilhaft ist insbesondere ein ergonomisch ausgebildeter Fahrradgriff in Form eines Flügelgriffs mit großen Handballenauflagen, der federnd gelagert ist.

In einem Ausführungsbeispiel ist das Greifelement aus Holz. Bevorzugt ist das Holz fein geschliffenes und geölt. Holz weist eine spürbar angenehmere Haptik auf gegenüber anderen Materialien wie Gummi u.Ä auf. Insbesondere führt der Gebrauch von Holz auch zu weniger oder keinen Ablagerungen und Verschmutzungen. Ebenso denkbar ist als Material für das Greifelement ein Kunststoff, der sehr dicht und glatt ist, um die oben genannten Erfordernisse zu erreichen. Es ist insbesondere möglich, die Flächen des Greifelements für Werbung etwa für Firmen zu nutzen, etwa indem das Material in Firmenlogofarben und Mustern eingefärbt wird.

Besonders vorteilhaft ist der Einsatz von Holzgriffen, da eine ansprechende Haptik auf einen großen Federungskomfort trifft. Die vorgeschlagene Federung hat darüber hinaus eine Eigenschaft, die einen breiten Einsatz bei vielen Klassen von Rädern sinnvoll machen: Anders als bei Federgabeln ist die Federwirkung an- und abstellbar. Einsetzbar durch Auflegen der Handballen mit entspanntem Handgelenk oder Abstellbar durch Anspannen des Handgelenkes. Dadurch entsteht eine sehr direkte Verbindung zum Fahrradgriff.

Jeder Fahrer kann in einer besonderen Ausführung individuell die Wirkung des Federelements einstellen. Insbesondere kann die Federkraft durch Einstellen der Federlänge einstellbar sein.

Bevorzugt kann das Federelement stabförmig sein und insbesondere ein Mehrkantprofil, bevorzugt ein Vierkantprofil, aufweisen.

In einer Ausführung der Erfindung weist der Fahrradgriff ferner ein Halteelement zum endseitigen Fixieren des Federelements in Form etwa einer Halterung auf und ein Verstellmittel etwa in Form eines Nutklotzes zum Verstellen der Federkraft des Federelements.

Bevorzugt lässt sich das Verstellmittel in einer Ausführung der Erfindung in axialer Richtung des Federelements drehfest zu diesem verschieben.

Ferner ist es mit einer weiteren Ausführung bevorzugt, wenn sich das Greifelement gegenüber dem Lenkerrohr in eine Ausgangsposition, in der es nicht mit einer Kraft beaufschlagt ist, überführbar ist, derart dass das Greifelement gegenüber dem Lenkerrohr in einer Mehrzahl von Anstellwinkeln stufenweise verstellbar und am Lenkerrohr fixierbar ist. Dies ermöglicht eine radiale feinstufige Verstellmöglichkeit der Position der Abstützflächen.

Die einzelnen Ausführungsbeispiele der Erfindung können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen stark schematisiert
Fig. 1 im Schnitt die Einzelteile eines veränderbar gefederten Fahrradgriffes;
Fig. 2 eine Explosionszeichnung eines Fahrradgriffes
Fig. 3 weitere Einzelteile eines alternativen Fahrradgriffes in perspektivischer oder Schnittansicht.

### DETAILLIERTE BESCHREIBUNG BEISPIELHAFTER AUSFÜHRUNGSFORMEN

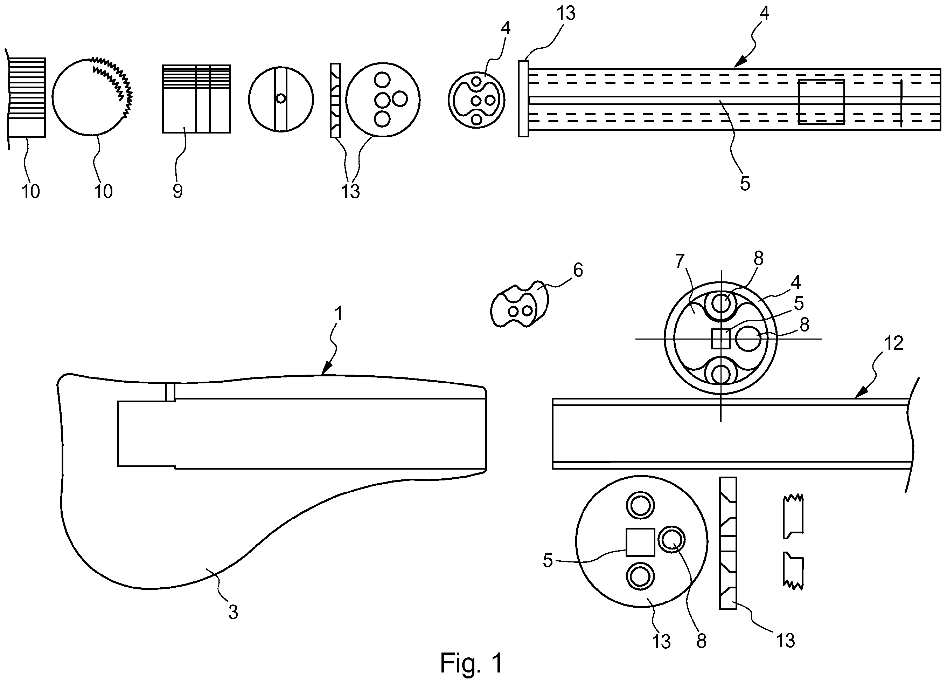

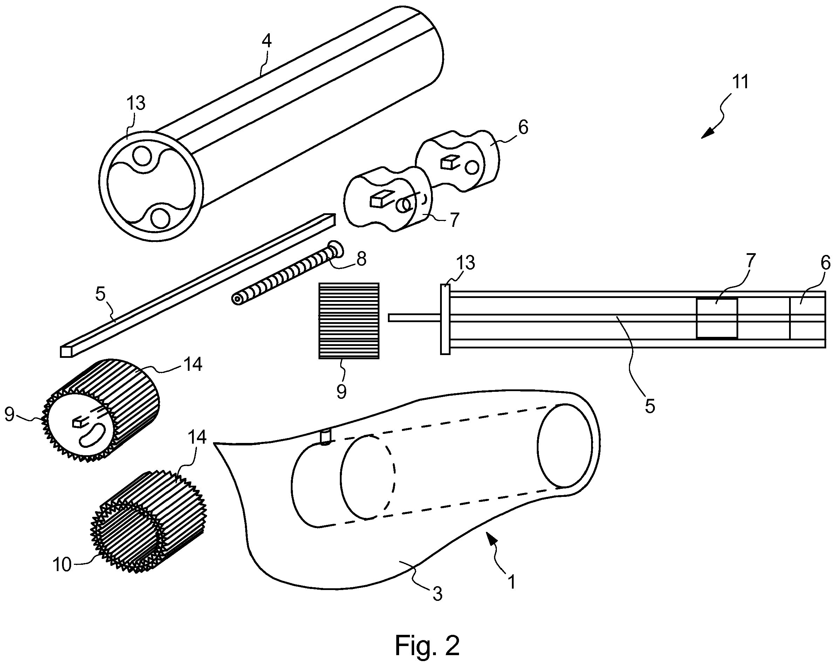

Fig. 1 zeigt im Schnitt die Einzelteile eines veränderbar gefederten Fahrradgriffes. Insbesondere ist ein Lenkerrohr 12, eine Hülse 4 mit Bund 13 und ein Greifelement 1 mit einem Abstützteil 3 gezeigt. Die weiteren hier gezeigten Elemente werden für die Figur 2 näher erläutert.

Fig. 2 zeigt eine Explosionszeichnung mit einen geschwungenen Greifelement 1 in Form eines Fahrradflügelgriffs mit einem Abstützteil 3 für eine Verbesserung der Handballenauflage. Um das Greifelement 1 federnd am Lenkerrohr 12 fixieren zu können, ist eine in dem Lenkerrohr 12 fixierbare, beispielsweise geklebte, geschraubte oder als Teil des Lenkerrohres ausgebildete Hülse 4 und ein aus dem Lenkerrohr 12 herausragender Torsionsstab 5 als Federelement, der an einer mit der Hülse 4 fest verbundenen Halterung 6 fixiert ist, vorgesehen.

In der Hülse 4 ist ein Nutklotz 7 verschiebbar geführt, der den Torsionsstab 5 in seiner Federwirkung in an sich bekannter Weise durch Vergrößerung der Verkleinerung des Federweges beeinflusst. Die Beeinflussung wird insbesondere durch eine Verkürzung oder Verlängerung der freien Länge des Torsionsstabes 5 hervorgerufen. Die freie Länge lässt sich von Schraube 8 aus stirnseitig einstellen. Der Torsionsstab 5 hat ein Profil, das eine formschlüssige Verbindung mit der Kupplungswelle 9 erlaubt. Vorzugsweise handelt es sich um ein Vierkantprofil. Die Kupplungswelle 9 ist so ausgeführt, daß sie den Flügelgriff 1 in vielen verschiedenen Drehwinkeln fixieren kann. Beispielsweise besitzt sie dafür außen eine Feinzahnung 14 und das im Griff angebrachte Kupplungslager 10 eine entsprechende Innenverzahnung.

Ebenso denkbar ist ein spiralförmig ausgeführter Torsionsstab, der eine Feinverstellung des Griffwinkels erzielt mit einer geringügigen axialen Verschiebung des Griffes um einige Millimeter.

Die abschließende Fixierung des Greifelements 1 auf dem Lenker 12 erfolgt durch ein Aufschieben des Greifelements 1 auf die Lenkstange 12 bis die Verzahnung 14 greift und durch ein anschließendes Klemmen mit Hilfe einer Madenschraube oder Ähnlichem.

Der drehbar gelagerte Flügelgriff 3 als Teil des Greifelements 1 erhält somit seine Federung durch den an das Lenkerrohr, mittels Hülse 4 und Halterung 6 fixierten Torsionsstab 5. Der Torsionsstab 5 ist griffseitig mit der Kupplungswelle 9 und dem Kupplungslager 10 verbunden. Durch diese Lagerung werden Stöße des Bodenbelags bei Radfahren nicht mehr unmittelbar auf die Arme des Fahrers übertragen oder ein ruckartiges Vorbeugen des Oberkörpers wird abgefedert durch ein Nachgeben der Torsionsstange. Die Torsionssteifigkeit lässt sich durch ein Verschieben eines Nutklotzes 7 steuern, und kann mittels einer Schraube 8 eingestellt werden. Die genaue Position des Flügels des Griffes bzw. dessen Abstützteil 3 lässt sich durch ein radial unterschiedliches Aufschieben auf die Zahnung von Kupplung Ziffer 9 auf Kupplungslager Ziffer 10 einstellen.

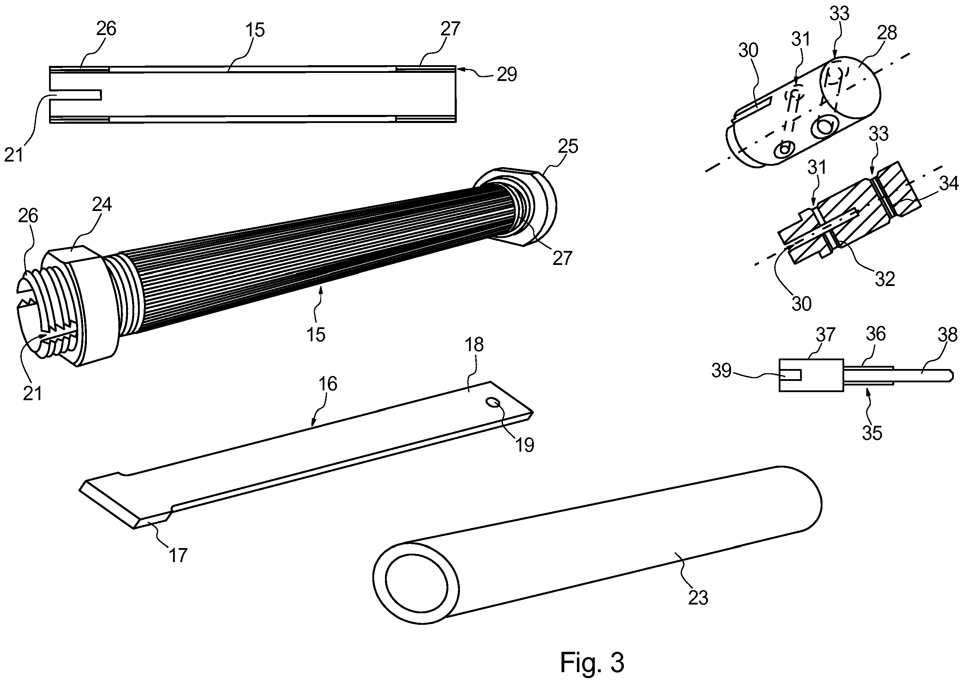

In der Figur 3 sind ferner Einzelteile eines alternativen Fahrradgriffes gezeigt, die beispielsweise mit dem in Figur 1 gezeigten Greifelement 1 zusammenwirken können. In einer als Hülse 15 ausgebildeten Halteelement ist ein Federstahlelement 16 einschiebbar, und zwar derart, dass ein verbreitertes Endstück 17 des Federstahlelements in eine nutenförmige Ausnehmung 21 der Hülse 15 einsteckbar ist. Das weitere Endstück 18 des Federstahlelements weist eine Öffnung 19 auf in die eine hier nicht gezeigte Senkschraube einschiebbar ist. Das Endstück 18 weist bei eingebauter Hülse zur Lenkerrohröffnung. Die Hülse hat ferner Rippen 22, die eine reibschlüssige Verbindung mit einer Kunststoff- oder Kautschukhülse 23 eingehen können, die über die Hülse 15 aufschiebbar ist. Die Kunststoffhülse 23 wird mittels Schraubelementen 24, 25 die auf zwei Gewinde 26, 27 der Hülse 15 aufgeschraubt werden, zusammengedrückt, derart, dass sich der Außendurchmesser der Kunststoffhülse 23 vergrößert und dadurch gegenüber einer inneren Wandung des Lenkerrohrs anliegt und dort drehfest mit dieser verbunden ist. Da das Schraubelement 24 in dem Lenkerrohr liegt, ist dessen Durchmesser an den Innendurchmesser des Lenkerrohrs anzupassen. Ferner ist noch ein Abschlussbolzen 28 gezeigt, der auf die Hülse 15, und zwar auf deren Seite 29 aufsteckbar ist. Der Abschlussbolzen besitzt eine Nut 30, in die das Federstahlelement 16 einschiebbar ist. An dem Abschlussbolzen ist eine Öffnung 31 mit Innengewinde 32 vorgesehen, in die die erwähnte Senkschraube eingeschraubt werden kann, um das Federstahlelement 16 zu sichern. In eine weitere Öffnung 33 mit Innengewinde 34 ist zur Aufnahme eines Einsteckbolzens 35 mit entsprechendem Außengewinde 36 vorgesehen. Der Einsteckbolzen durchdringt mit den beiden Endabschnitten 37, 38 eine Durchgangsbohrung und eine Sacklochbohrung des Greifelements (Fig. 1) wobei der Einsteckbolzen 35 mittels einer Werkzeugaufnahme 39 an dem Endabschnit 37 von außerhalb des Greifelements verdrehbar ist.

Anders als in den in Fig. 1 und 2 gezeigten Ausführungsbeispielen, lässt sich die Federkraft mit den in Fig. 3 gezeigten Elementen des Fahrradgriffs nicht verstellen.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Greifelement
- 2: Hülse
- 3: Abstützteil, Flügelgriff
- 4: Hülse
- 5: Federelement in Form eines Torsionstabes
- 6: Halterung für Torsionsstab
- 7: verschiebbarer Nutklotz
- 9: Kupplungswelle
- 10: Kupplungslager
- 11: Fahrradgriff
- 12: Lenkerrohr
- 13: Bund
- 14: Feinzahnung
- 15: Hülse
- 16: Federstahlelement
- 17: Endstück
- 18: Endstück
- 19: Öffnung
- 21: Ausnehmung
- 22: Rippen
- 23: Kunststoffhülse
- 24: Schraubelement
- 25: Schraubelement
- 26: Gewinde
- 27: Gewinde
- 28: Abschlussbolzen
- 29: Seite
- 30: Nut
- 31: Öffnung
- 32: Innengewinde
- 33: Öffnung
- 34: Innengewinde
- 35: Einsteckbolzens
- 36: Außengewinde 36
- 37: Endabschnitt
- 38: Endabschnitt
- 39: Werkzeugaufnahme

## Patentansprüche

1. Fahrradgriff (11), aufweisend ein auf ein Lenkerrohr (12) eines Fahrradlenkers aufschiebbares Greifelement (1) mit einem Abstützteil (3), geeignet zur Auflage der Handballen, ein Halteelement (4; 15) und ein Federelement (5; 16), wobei das Federelement (5; 16) und das Halteelement (4; 15) innerhalb des Lenkerrohrs (12) anordenbar sind, wobei das Federelement (5; 16) mit dem Halteelement (4; 15) und dem Greifelement (1) drehfest verbindbar ist, derart dass bei einer Kraftbeaufschlagung des Abstützteils (3) gegen eine Federkraft des Federeelements (5; 16) in einem auf das Lenkerrohr aufgeschobenen Zustand eine Drehbewegung des Greifelements (1) um die Rohrmittelachse des Lenkerrohrs (12) ausführbar ist, wobei die Form des Abstützteils so gestaltet ist, dass das Greifelement eine Flügelform aufweist.

2. Fahrradgriff nach Anspruch 1, wobei das Greifelement (1) aus Holz ist.

3. Fahrradgriff nach Anspruch 1 oder 2, wobei das Federelement (5; 16) stabförmig ist und insbesondere ein Mehrkantprofil, bevorzugt ein Vierkantprofil, aufweist.

4. Fahrradgriff nach einem der vorangegangenen Ansprüche, wobei die Federkraft insbesondere durch Einstellen der Federlänge einstellbar ist.

5. Fahrradgriff nach einem der vorangegangenen Ansprüche, wobei sich das Greifelement (1) von einer Ausgangsposition, in der es nicht mit einer Kraft beaufschlagt ist, um zumindest 10 Grad, bevorzugt mindestens 15 Grad, noch bevorzugt mindestens 20 Grad um die Mittelachse des Lenkerrohrs (12) gegen die Federkraft des Federelements (5; 16) händisch verdrehen lässt.

6. Fahrradgriff nach einem der vorangegangenen Ansprüche, ferner aufweisend ein weiteres Halteelement (6) zum endseitigen Fixieren des Federelements und ein Verstellmittel (7) zum Verstellen der Federkraft des Federelements.

7. Fahrradgriff nach Anspruch 6, wobei sich das Verstellmittel (7) in axialer Richtung des Federelements drehfest zu diesem verschieben lässt.

## Claims

1. A bicycle handle (11), comprising a gripping element (1) with a support part (3) slidable onto a handlebar tube (12) of a bicycle handlebar, suitable for placing the balls of the thumbs there, a holding element (4; 15), and a spring element (5; 16), wherein the spring element (5; 16) and the holding element (4; 15) can be arranged within the handlebar tube (12), wherein the spring element (5; 16) can be non-rotatably connected to the holding element (4; 15) and the gripping element (1), such that when a force is applied to the support part (3) against a spring force of the spring element (5; 16), a rotational movement of the gripping element (1), in a state slid onto the handlebar tube, is executable about the tube centre axis of the handlebar tube (12), wherein the shape of the support part is designed such that the gripping element has a wing shape.

2. The bicycle handle according to claim 1, wherein the gripping element (1) is made of wood.

3. The bicycle handle according to claims 1 or 2, wherein the spring element (5; 16) is rod-shaped, and in particular has a polygonal profile, preferably a square profile.

4. The bicycle handle according to any one of the preceding claims, wherein the spring force is adjustable in particular by adjusting the spring length.

5. The bicycle handle according to any one of the preceding claims, wherein the gripping element (1), from a starting position, in which it is not subjected to a force, can be manually twisted against the spring force of the spring element (5; 16) by at least 10 degrees, preferably at least 15 degrees, more preferably at least 20 degrees about the central axis of the handlebar tube (12).

6. The bicycle handle according to any one of the preceding claims, further comprising a further holding element (6) for fixing the end of the spring element and an adjusting means (7) for adjusting the spring force of the spring element.

7. The bicycle handle according to claim 6, wherein the adjusting means (7) is non-rotatably slidable relative to the spring element in the axial direction thereof.

## Revendications

1. Poignée de bicyclette (11) comprenant un élément de préhension (1) qui peut être enfilé sur un tube de guidon (12) d'un guidon de bicyclette et qui comporte un élément d'appui (3), qui convient pour soutenir les paumes de la main, un élément de maintien (4 ; 15) et un élément ressort (5 ; 16) ; l'élément de ressort (5 ; 16) et l'élément de maintien (4 ; 15) peuvent être disposés à l'intérieur du tube de guidon (12), l'élément ressort (5; 16) étant relié à l'élément d'appui (4 ; 15) et l'élément de préhension (1) peuvent être reliés de manière solidaire en rotation, de sorte que lorsque la partie d'appui (3) est soumise à une force qui s'exerce contre la force de ressort de l'élément de ressort (5 ; 16) dans un état poussé sur le tube de guidon, un mouvement de rotation de l'élément de maintien (1) autour de l'axe central du tube de guidon (12) peut être accompli, de sorte que la forme de l'élément d'appui est conçue de telle manière que le tube de guidon présente une forme d'aile.

2. Poignée de bicyclette selon la revendication 1, dans laquelle l'élément de préhension (1) est en bois.

3. Poignée de bicyclette selon la revendication 1 ou 2, dans laquelle l'élément de ressort (5 ; 16) est en forme de tige et présente en particulier un profil polygonal, de préférence un profil carré.

4. Poignée de bicyclette selon l'une quelconque des revendications précédentes, dans laquelle la force du ressort peut être ajustée en particulier par un réglage de la longueur du ressort.

5. Poignée de bicyclette selon l'une quelconque des revendications précédentes, dans laquelle l'élément de préhension (1) peut être tourné manuellement autour de l'axe central du tube de guidon (12) à partir d'une position initiale dans laquelle il n'est pas sollicité par une force, et ce, d'au moins 10 degrés, de préférence d'au moins 15 degrés, de préférence même d'au moins 20 degrés, contre la force de ressort de l'élément de ressort (5 ; 16).

6. Poignée de bicyclette selon l'une quelconque des revendications précédentes, comprenant un autre élément de retenue (6) conçu pour fixer l'élément élastique à l'extrémité et un moyen de réglage (7) pour régler la force de ressort de l'élément de ressort.

7. Poignée de bicyclette selon la revendication 6, dans laquelle le moyen de réglage (7) peut être poussé de manière fixe en direction axiale vers l'élément de ressort.
